# EUROPEAN PATENT APPLICATION

(11) **EP 1 763 155 A1**
(43) Date of publication of application: **14.03.2007**
(21) Application number: 06019164.0
(22) Date of filing: 13.09.2006
(51) Int. Cl.: H04B 7/26, H04L 1/16

(54) **Communication method and system using time division duplex scheme and frequency division duplex scheme**

(30) Priority: 13.09.2005 KR 20050085274
(71) Applicant: Samsung Electronics Co., Ltd., Yeongtong-gu Suwon-si, Gyeonggi-do (KR)
(72) Inventor: Kim, Yung-Soo, Yeongtong-gu Suwon-si Gyeonggi-do (KR); Yun, Sang-Boh, Yeongtong-gu Suwon-si Gyeonggi-do (KR); Park, Seung-Young, Yeongtong-gu Suwon-si Gyeonggi-do (KR); Park, Dae-Young, Yeongtong-gu Suwon-si Gyeonggi-do (KR)
(74) Representative: Grünecker, Kinkeldey, Stockmair & Schwanhäusser Anwaltssozietät

(57) **Abstract**

A communication method in a communication system includes a base station that transmits downlink information to a terminal through a frequency band of a first communication scheme for a downlink period. The terminal transmits uplink information to the base station through the frequency band of the first communication scheme or a frequency band of a second communication scheme that is different from the frequency band of the first communication scheme, for an uplink period.

## Description

### BACKGROUND OF THE INVENTION

### 1. Field of the Invention

The present invention relates generally to bidirectional communication in a communication system, and in particular, to a hybrid communication method and system using a frequency division duplex (FDD) scheme and a time division duplex (TDD) scheme.

### 2. Description of the Related Art

Generally, the 3^{rd} generation communication system can use FDD and TDD schemes for bidirectional communication. The FDD scheme is suitable for providing voice service to users moving at high speed in a cellular environment, and the existing 2^{nd} generation Global System for Mobile Communications (GSM) and Interim Standard-95 (IS-95) use the FDD scheme. Most 3^{rd} generation systems also use the FDD scheme. The TDD scheme is suitable for providing data-oriented service in a fixed or low-speed nomadic/wireless LAN environment.

In the TDD scheme, it is not possible to design a system for reducing transmission delay while enlarging cells and increasing transmission efficiency of frames. For this reason, the TDD scheme is unsuitable for providing voice service in a high-speed moving environment. In addition, a long-length TDD frame is advantageous for increasing transmission efficiency. Each TDD frame should always include overheads such as a guard time, e.g., Tx/Rx Transition Gap (TTG) or Rx/Tx Transition Gap (RTG), and a synchronization signal. The guard time is a value determined mainly depending on the cell size, and requires a specific size. In order to increase design efficiency by reducing a percentage of the overheads, it is necessary to increase the frame length. From 7 layers based on the open system inter-connection (OSI) reference model, a media access control (MAC) layer that manages control based on a connection method of a physical transmission line also requires a long frame length in order to increase the efficiency considering a MAC overhead.

However, in the TDD scheme, the frame length should be small in order to reduce transmission delay and cope with high-speed movement. That is, in order to provide low-delay constraint service, a size of the TDD frame should be small. If a terminal moves, its channel characteristic undergoes a change. To determine the best modulation and coding scheme (MCS) level and power according to the time-varying channel characteristic, it is necessary to frequently exchange various control signals. For this purpose, the frame length should be short.

The next generation communication system should satisfy the following conditions.
- Provide both mobile and nomadic communication environments, e.g., provide high-speed communication service to users moving at high speed in the cellular environment, and provide high-speed communication service in a nomadic fixed or low-speed environment, such as a pedestrian environment.
- Simultaneously providevarious multimedia services including voice service.

In order to satisfy the foregoing conditions, there is a need for a frame structure and a communication scheme having advantages of both the FDD and TDD schemes.

### SUMMARY OF THE INVENTION

It is, therefore, an object of the present invention to provide a communication method and system capable of reducing transmission delay and effectively coping with high-speed movement while increasing transmission efficiency by increasing a frame length.

It is another object of the present invention to provide a hybrid duplex communication method and system capable of providing advantages of both a TDD and an FDD scheme.

According to the present invention, there is provided a communication method in a communication system, including transmitting, by a base station, downlink information to a terminal through a frequency band of a first communication scheme for a downlink period, and transmitting, by the terminal, uplink information to the base station through the frequency band of the first communication scheme or a frequency band of a second communication scheme, which is different from the frequency band of the first communication scheme, for an uplink period.

According to the present invention, there is provided a first embodiment of a system in a communication system, including a base station having a transmitter for transmitting downlink information to a terminal through a frequency band of a first communication scheme for a downlink period, and a receiver for receiving uplink information from the terminal through the frequency band of the first communication scheme or a frequency band of a second communication scheme, which is different from the frequency band of the first communication scheme, for an uplink period.

According to the present invention, there is provided a second embodiment of a system in a communication system, including a terminal having a receiver for receiving downlink information from a base station through a frequency band of a first communication scheme for a downlink period, and a transmitter for transmitting uplink information to the base station through the frequency band of the first communication scheme or a frequency band of a second communication scheme, which is different from the frequency band of the first communication scheme, for an uplink period.

### BRIEF DESCRIPTION OF THE DRAWINGS

The above and other objects, features and advantages of the present invention will become more apparent from the following detailed description when taken in conjunction with the accompanying drawings in which:
FIG. 1 is a diagram illustrating an HDD frame/time slot structure according to the present invention;
FIG. 2 is a diagram illustrating the construction of a base station according to the present invention;
FIG. 3 is a diagram illustrating the construction of a terminal according to the present invention; and
FIGs. 4 and 5 are graphs illustrating overhead ratios versus a guard time length and a frame length, respectively, when a typical TDD frame structure is used.

### DETAILED DESCRIPTION OF THE PREFERRED EMBODIMENTS

Preferred embodiments of the present invention will now be described in detail with reference to the annexed drawings. In the following description, a detailed description of known functions and configurations incorporated herein has been omitted for the sake of clarity and conciseness.

The present invention provides a hybrid duplex (HDD) communication method and system capable of providing advantages of both a TDD scheme and an FDD scheme. In addition, the preset invention provides a communication method and system capable of solving the problems occurring in the typical TDD scheme, while using a TDD band in the HDD scheme.

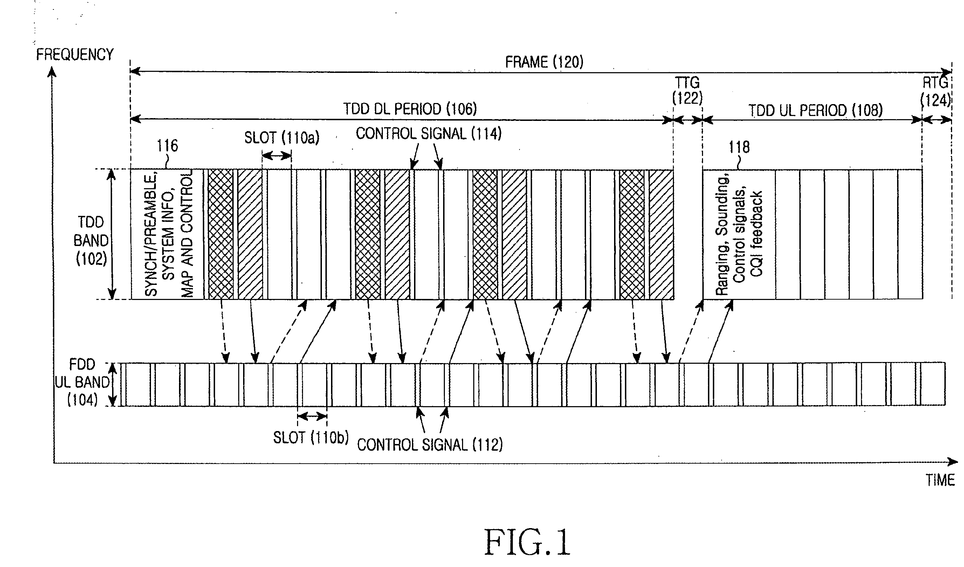

FIG. 1 illustrates an HDD frame/time slot structure according to the present invention.

Referring to FIG. 1, the HDD scheme transmits/receives signals using two frequency bands 102 and 104. The first frequency band 102 is a TDD band used for transmitting/receiving signals by dividing slots 110a and 110b (hereinafter 110), and the second frequency band 104 is an FDD UL band used for transmission of a terminal and for reception of a base station, such as an FDD uplink (FDD UL). Transmission/reception through a TDD downlink (TDD DL) and a TDD UL using the first frequency band 102 occurs the same as in the conventional TDD communication, and transmission/reception through a TDD DL and an FDD UL using the first and second frequency bands 102 and 104 is similar to the conventional FDD communication. Therefore, the HDD scheme provides a communication scheme using both the TDD scheme and the FDD scheme.

Meanwhile, user signals and control signals are divided into a first group requiring low transmission delay and a second group that does not require such a low transmission delay. A length of one frame 120 is set as long as possible to reduce a loss due to various overheads and increase the efficiency. In both the TDD band 102 and the FDD UL band 104, one frame 120 includes several slots 110, and in the TDD band 102, one frame 120 includes a TDD DL frame corresponding to a TDD DL period 106 and a TDD UL frame corresponding to a TDD UL period 108. The TDD DL frame and the TDD UL frame are distinguished by a guard time, for example, a Tx/Rx Transition Gap (TTG) 122 and an Rx/Tx Transition Gap (RTG) 124. In particular, each slot 110 in the TDD DL period 106 includes mini control slots 112 and 114 for transmitting control signals. The control signals transmitted in the TDD DL period 106 are used for converting a transmission packet format or a modulation and coding scheme (MCS) level in units of slots according to hybrid automatic repeat request (HARQ), automatic repeat request (ARQ), and adaptive modulation and coding scheme (AMC).

The signal requiring a transmission delay less than a transmission delay threshold set according to a communication environment is designed in units of slots, and transmitted/received through a TDD DL and an FDD UL. A feedback of the signal transmitted in a TDD DL slot or an FDD UL slot is transmitted through a corresponding FDD UL slot or TDD DL slot. Because the slot length is much shorter than the frame length, the delay condition can be simply satisfied in the TDD DL period 106. On the contrary, the signal unaffected by the small transmission delay constraint is transmitted/received through a TDD DL and a TDD UL of the first frequency band 102, thereby increasing the transmission rate and efficiency.

A detailed description will now be made of a structure of the frame 120 using specific numerical values.

Assuming that a frame length is T_{frame}=10ms and a slot length is Tₛₗₒₜ=0.4ms, 25 slots 110 exist in one frame 120. The TTG 122 indicating the time in which transition from the TDD DL period 106 to the TDD UL period 108 occurs is TTG=0.12ms, and the RTG 124 indicating the time in which transition from the TDD UL period 108 to the next TDD DL period (not shown) occurs is RTG=0.04ms. If a length of a TDD DL overhead 116 including synchronization/preamble signals, various system information, mapping information (e.g. MAP information), and control information is 1.04ms, and a length of a TDD UL overhead 118 including various UL control information is 0.4ms, then 1.6ms overhead is required for one frame 120. Therefore, 19 TDD slots (=8.4ms) can be used for transmitting/receiving user signals through a DL/UL in one frame 120. Likewise, even in the FDD UL band 104, one frame 120 includes 25 slots.

MAP information included in the TDD DL overhead 116 represents MAP information for the full frame 120 including TDD DL, TDD UL and FDD UL. In addition, each TDD DL slot 110a transmits a slot-based control signal along with a user signal, and exchanges signals with FDD UL slots 110b by short periods of slots.

In the uplink, user signals and control signals are transmitted through a TDD UL or an FDD UL according to a feedback delay condition. FDD UL transmission will first be described.

The UL user signal requiring a transmission delay less than the transmission delay threshold is transmitted through each slot 110b of the FDD UL band 104 in units of slots. The feedback signal for such signal such as acknowledgement (ACK)/non acknowledgement (NACK) can be received through the next slot 110a of the TDD DL period 106 before expiration of one frame. Because fast feedback is possible, the FDD UL band 104 carries the signals requiring a low transmission delay, i.e. real-time service signals such as voice over internet protocol (VoIP) packets and video conference signals. However, when the amount of user signals that should be sent through the FDD UL is small, and thus there are FDD UL resources (frequency/time/code) left unused, the user signals unaffected by the small transmission delay constraint, can also be transmitted through the FDD UL.

Similarly, various UL control signals, i.e. ACK/NACK signal, channel quality indicator (CQI) signal, power control signal, MCS level signal, and channel/user information, that should be feedback very rapidly in response to the DL user signal are transmitted through each mini control slot 112 of the FDD UL band 104.

Next, TDD UL transmission will be described.

The user signal having a feedback signal that can be received slowly in units of frames, i.e. the user signal unaffected by the small transmission delay constraint, is transmitted in the TDD UL period 108. The non real-time service signal or the streaming service signal corresponds to this user signal. A feedback signal, such as ACK/NACK, for the UL user signal transmitted through the TDD UL is received in the TDD DL period of the next frame. Various control signals such as a CQI signal for the user signal allowing the slow feedback in units of frames (hereinafter frame-based slow feedback) are transmitted through the TDD UL overhead 118 in the TDD UL period 108.

The other UL system signals such as sounding signal and ranging signal, are allowed to be transmitted through either of the TDD UL and the FDD UL, but these signals can be transmitted slowly in units of frames. Therefore, it is advantageous to transmit these signals through the TDD UL. The sounding signal is used for power measurement and channel estimation, like the pilot signal. The ranging signal, an all-1 or all-0 signal without bit transition, is used for synchronization. If the sounding signal is sent through the TDD UL, a base station can estimate a transmission channel using channel reciprocity of the TDD, and use the estimated channel characteristic for TDD DL transmission.

In the DL, the user signals and the control signals are transmitted in units of either frames or slots according to feedback delay condition. The transmission in units of frames (hereinafter frame-based transmission) will now be described.

The user signal allowing the frame-based slow feedback is transmitted in the TDD DL period 106, and its feedback signal is received through the TDD UL overhead 118 of the TDD UL period 108 in the next frame. Control signals for one entire frame of both the TDD band and the FDD UL band, such as system information and MAP information, and various feedback control signals for a TDD UL signal, are carried by the TDD DL overhead 116 of the TDD DL period 106 in units of frames.

Next, transmission in units of slots (hereinafter slot-based transmission) will be described.

The user signal requiring low transmission delay is transmitted through each slot 110a of the TDD DL period 106 in units of slots, and the feedback signal, such as ACK/NACK, for the user signal is received through the mini control slot 112 of the FDD UL band 104 before expiration of one frame. MAP information valid only for the allocated slot, and various control signals, e.g., ACK/NACK signal, CQI signal, power control signal, MCS level signal and channel/user information, for the user signal requiring slot-based fast feedback, are carried by each mini control slot 114 of the TDD DL period 106 in units of slots.

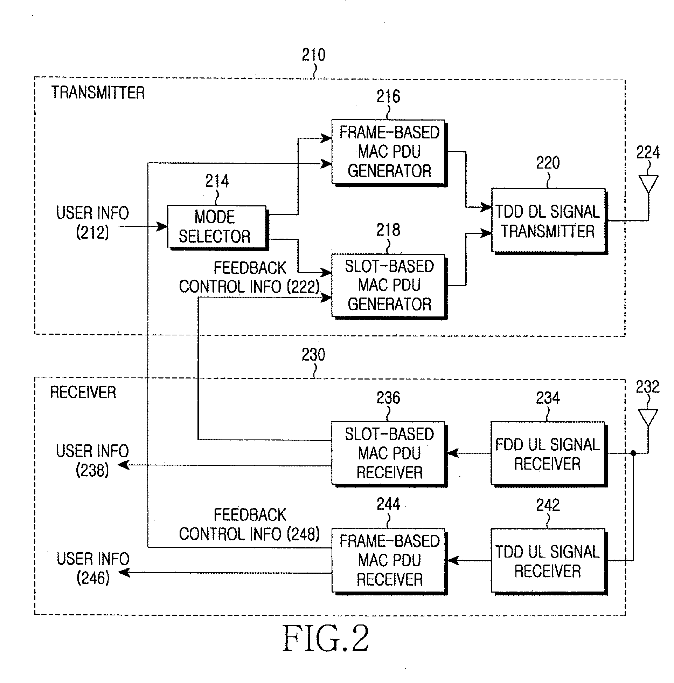

FIG. 2 is a diagram illustrating the construction of a base station according to the present invention.

Referring to FIG. 2, a transmitter 210 controls DL transmission, and includes a mode selector 214, a frame-based media access control (MAC) protocol data unit (PDU) generator 216, a slot-based MAC PDU generator 218, a TDD DL signal transmitter 220 and a transmission antenna 224. A receiver 230 controls UL reception, and includes a reception antenna 232, an FDD UL signal receiver 234, a slot-based MAC PDU receiver 236, a TDD UL signal receiver 242 and a frame-based MAC PDU receiver 244.

If user information 212 is input to the transmitter 210, the mode selector 214 determines the delay constraint of the user information 212, whether fast feedback is required or not. If the user information 212 is required to be transmitted with a low delay, the mode selector 214 delivers the user information 212 to the slot-based MAC PDU generator 218. However, if the user information 212 is not required to be transmitted with a low delay, the mode selector 214 transmits the user information 212 to the frame-based MAC PDU generator 216. Feedback control information 222 received through an FDD UL band is input to the slot-based MAC PDU generator 218. In addition, feedback control information 248 received in a TDD UL period of a TDD band is input to the frame-based MAC PDU generator 216.

The slot-based MAC PDU generator 218 generates a MAC PDU of a one-slot length using the received user information 212 according to the feedback control information 222, and transmits the generated MAC PDU to the TDD DL signal transmitter 220. The feedback control information 222 can be used for determining information bits included in the one-slot length MAC PDU, and an MCS level and transmission power for the one-slot length MAC PDU. Various control signals associated with user information 238 received through an FDD UL band are mapped to a part corresponding to a mini control slot in the one-slot length MAC PDU. The TDD DL signal transmitter 220 modulates the one-slot length MAC PDU, and then transmits the modulated MAC PDU to a terminal via the antenna 224 along with an RF signal of a TDD band in a TDD DL period.

The frame-based MAC PDU generator 216 generates a MAC PDU of a TDD DL period length using the received user information 212 according to the feedback control information 248, and transmits the generated MAC PDU to the TDD DL signal transmitter 220. The feedback control information 248 can be used for determining information bits included in the MAC PDU of a TDD DL period length, and an MCS level and transmission power for the MAC PDU of a TDD DL period length. In addition, various control signals associated with the user information 246 received in a TDD UL period of a TDD band are mapped to a DL overhead part in the MAC PDU of a TDD DL period length. The TDD DL signal transmitter 220 modulates the MAC PDU of a TDD DL period length, and then transmits the modulated MAC PDU to the terminal via the antenna 224 along with an RF signal of a TDD band in a TDD DL period.

The reception antenna 232 receives an RF signal, and transmits a signal of a TDD band to the TDD UL signal receiver 242, and a signal of an FDD UL band to the FDD UL signal receiver 234. The FDD UL signal receiver 234 demodulates the FDD UL-band signal, and transmits the demodulated signal to the slot-based MAC PDU receiver 236. The slot-based MAC PDU receiver 236 restores a one-slot length MAC PDU from the demodulated FDD UL-band signal, and detects user information 238 included in the one-slot length MAC PDU. In addition, the feedback control information 222 detected from the part corresponding to a mini control slot in the one-slot length MAC PDU is transmitted to the slot-based MAC PDU generator 218 of the transmitter 210.

The TDD UL signal receiver 242 demodulates the TDD-band signal received in the TDD UL period, and transmits the demodulated signal to the frame-based MAC PDU receiver 244. The frame-based MAC PDU receiver 244 restores a MAC PDU of a TDD UL period length from the demodulated TDD-band signal, and detects user information 246 included in the MAC PDU of a TDD UL period length. In addition, the feedback control information 248 detected from a UL overhead part in the MAC PDU of a TDD UL period length is transmitted to the frame-based MAC PDU generator 216 of the transmitter 210.

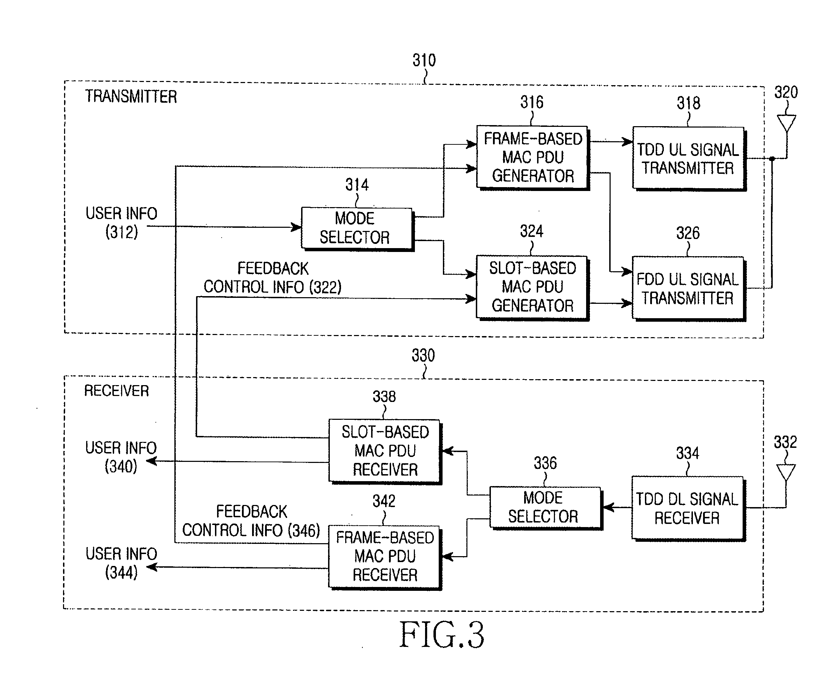

FIG. 3 is a diagram illustrating the construction of a terminal according the present invention.

Referring to FIG. 3, a transmitter 310 controls UL transmission, and includes a mode selector 314, a frame-based MAC PDU generator 316, a TDD UL signal transmitter 318, a slot-based MAC PDU generator 324, an FDD UL signal transmitter 326 and a transmission antenna 320. A receiver 330 controls DL reception, and includes a reception antenna 332, a TDD DL signal receiver 334, a mode selector 336, a slot-based MAC PDU receiver 338 and a frame-based MAC PDU receiver 342.

If user information 312 is input to the transmitter 310, the mode selector 314 determines whether the user information 312 is susceptible to transmission delay, requiring fast feedback. If the user information 312 is susceptible to transmission delay, the mode selector 314 transmits the user information 312 to the slot-based MAC PDU generator 324. However, if the user information 312 is not susceptible to transmission delay, the mode selector 314 transmits the user information 312 to the frame-based MAC PDU generator 316. Feedback control information 322 received in a TDD DL period of a TDD band in units of slots is input to the slot-based MAC PDU generator 324. In addition, feedback control information 346 received in a TDD DL period of a TDD band in units of frames is input to the frame-based MAC PDU generator 316.

The slot-based MAC PDU generator 324 generates a MAC PDU of one slot length using the received user information 312 according to the feedback control information 322, and transmits the generated MAC PDU to the FDD UL signal transmitter 326. The feedback control information 322 can be used for determining information bits included in the one-slot length MAC PDU, and an MCS level and transmission power for the one-slot length MAC PDU. Various control signals associated with user information 340 received in the TDD DL period of the TDD band in units of slots are mapped to a part corresponding to a mini control slot in the one-slot length MAC PDU. The FDD UL signal transmitter 326 modulates the one-slot length MAC PDU, and then transmits the modulated MAC PDU to a base station via the antenna 320 along with an RF signal of an FDD band.

The frame-based MAC PDU generator 316 generates a MAC PDU of a TDD UL period length using the received user information 312 according to the feedback control information 346, and transmits the generated MAC PDU to the TDD UL signal transmitter 318. The feedback control information 346 can be used for determining information bits included in the MAC PDU of a TDD UL period length, and an MCS level and transmission power for the MAC PDU of a TDD UL period length. Various control signals associated with the user information 344 received in a TDD DL period of a TDD band in units of frames are mapped to a UL overhead part in the MAC PDU of a TDD UL period length. The TDD UL signal transmitter 318 modulates the MAC PDU of a TDD UL period length, and then transmits the modulated MAC PDU to the base station via the antenna 320 along with an RF signal of a TDD band in a TDD UL period.

If there is a surplus in the FDD band, the frame-based MAC PDU generator 316 generates a MAC PDU including the user information 312 unaffected by transmission delay, and delivers the generated MAC PDU to the FDD UL signal transmitter 326. Then, the user information 312 unaffected by the transmission delay can also be carried by an FDD-band RF signal.

The reception antenna 332 receives an RF signal, and transmits a signal of a TDD band to the TDD DL signal receiver 334. The TDD DL signal receiver 334 demodulates the TDD-band signal received in the TDD DL period, and transmits the demodulated signal to the mode selector 336. The mode selector 336 determines whether the demodulated signal includes frame-based or slot-based user information, depending on MAP information of a DL overhead included in the demodulated signal. Depending on the determination, the mode selector 336 transmits the frame-based user information to the frame-based MAC PDU receiver 342. The frame-based MAC PDU receiver 342 restores a MAC PDU of a TDD DL period length from the demodulated signal, and detects user information 344 included in the MAC PDU of a TDD DL period length. In addition, the feedback control information 346 detected from a DL overhead part in the MAC PDU of a TDD DL period length is transmitted to the frame-based MAC PDU generator 316 of the transmitter 310.

Depending on the determination, the mode selector 336 transmits the slot-based user information to the slot-based MAC PDU receiver 338. The slot-based MAC PDU receiver 338 restores a one-slot length MAC PDU from the demodulated signal, and detects user information 340 included in the one-slot length MAC PDU. In addition, the feedback control information 322 detected from a part corresponding to each mini control slot in the one-slot length MAC PDU is transmitted to the slot-based MAC PDU generator 324 of the transmitter 310.

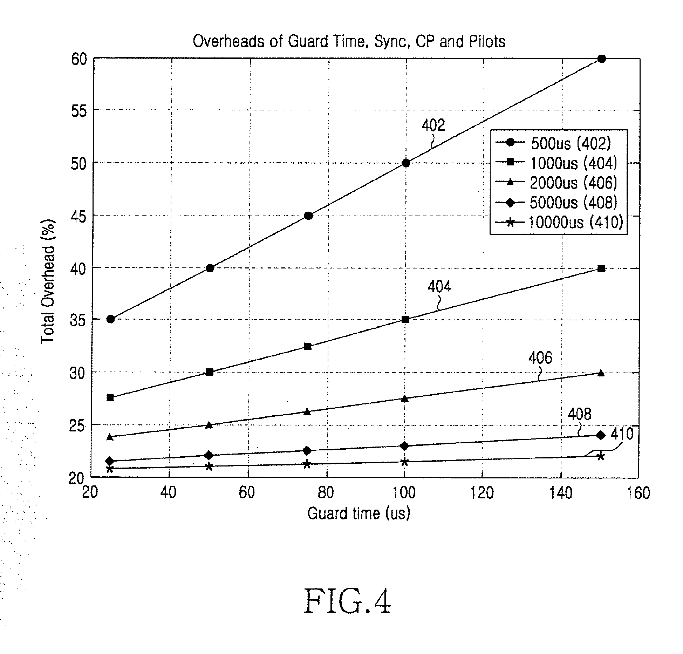

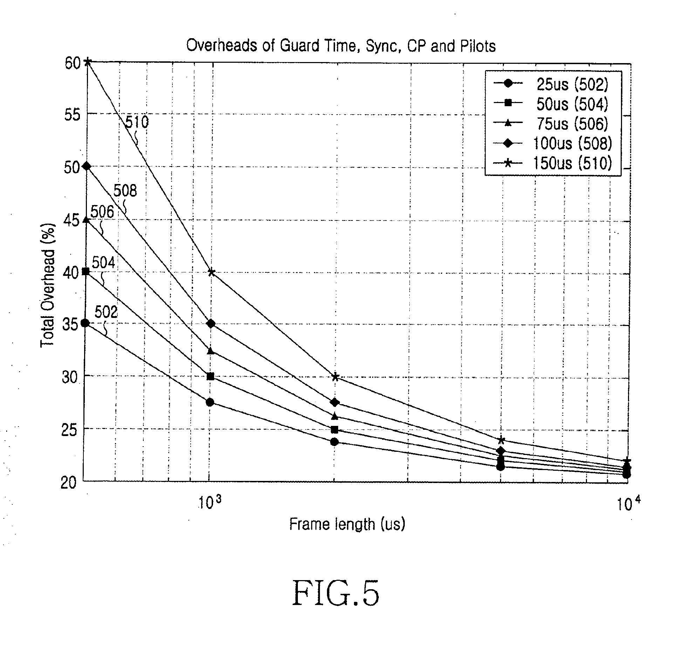

FIGs. 4 and 5 illustrate overhead ratios versus a guard time length and a frame length, respectively, for a TDD frame structure. In an orthogonal frequency division multiplexing (OFDM) scheme, a cyclic prefix (CP) for prevention of inter-symbol interference and a pilot for channel estimation are used, and a percentage of the CP and pilot to one frame is commonly 20%. One frame includes a fixed-length synchronization signal. Herein, a synchronization signal having a fixed length of 50µs is used.

Referring to FIG. 4, when the frame length increases to 500µs, 1000µs, 2000µs, 5000µs and 10000µs, percentages of the total overhead including CP, pilot, synchronization signal and guard time are shown by reference numerals 402 to 410 according to a length of the guard time. As illustrated, a decrease in the frame length greatly increases a percentage of the total overhead, and in order to obtain a desired low overhead ratio, there is a need for a short guard time length. Similarly, referring to FIG. 5, when a guard time length increases to 25µs, 50µs, 75µs, 100µs and 150µs, percentages of the total overhead are shown by reference numerals 502 to 510 according to a frame length.

That is, when the frame length is 0.5ms, an overhead ratio for a guard time=25µs is 35% as shown by reference numerals 402 and 502, and an overhead ratio for a guard time=150µs is 60% as shown by reference numerals 402 and 510. If the guard time is 25µs, signals generated by terminals distanced far away from a base station interfere with the signals generated by the base station or the terminals near the base station when the TDD period is changed from DL to UL, or vice-versa. In order to prevent the interference, the cell size has to be limited, decreasing the utility. On the contrary, if the guard time is set to 150µs in order to increase the cell size large enough, the overhead ratio becomes excessive, decreasing the transmission efficiency. The overhead ratio at which a loss due to the overhead will not considerably affect the transmission performance is, for example, 25% or below. For that purpose, the frame length should be at least 5ms, and if the frame length is 10ms, a loss due to the overhead is very low.

The time required for performing two retransmissions after initial transmission in the typical FDD and TDD environments can be calculated as follows.

In FDD, one slot is required for initially transmitting a user signal and one slot is required for detecting the user signal, totaling two required slots. One slot is required for feeding back a NACK signal due to error detection, one slot is required for detecting the NACK signal, one slot is required for retransmitting the user signal and one slot is required for detecting the retransmitted user signal. A total of four slots are required for one retransmission. As a result, a total of 10 slots are required for initial transmission and two retransmissions of the user signal.

In TDD, one frame is required for initially transmitting and detecting a user signal. One frame is required for feeding back a NACK signal due to error detection, one frame is required for retransmitting the user signal, and at least two frames are required for retransmission. As a result, at least five frames are required for initial transmission and two retransmissions of the user signal.

To enable initial transmission and two retransmissions within 10ms, an FDD slot should be not longer than 1ms and a TDD frame should be not longer than 2ms.

Alternatively, the frame structure according to the present invention can be designed such that the frame length is set to, for example, 10ms, and the slot length is set to 0.5ms or shorter. In this case, initial transmission and two retransmissions of the user signal is completed within 5ms, decreasing the transmission delay to 1/2 compared with the conventional FDD or TDD, and increasing the transmission efficiency by about 20% compared with the case where the frame length is 2ms.

As can be understood from the foregoing description, the HDD scheme using both the TDD band and the FDD UL band according to the present invention transmits/receives signals through a frame composed of a plurality of short slots. The HDD scheme transmits/receives the user signal and control signal requiring low transmission delay and low feedback delay within a short time of slots, thereby satisfying the required delay condition, and transmits/receives the remaining signals in units of frames in a manner that increases the transmission efficiency and flexibility.

In addition, the present invention enlarges the TDD frame length, thus contributing to a reduction in the loss due to various overheads. In the TDD scheme, the cell size is determined mainly depending on the guard time, so the cell size can be set large by increasing the guard time.

Further, the present invention can optimally use the advantages of the TDD scheme. The TDD scheme can adjust a DL-to-UL time ratio, so it can flexibly cope with a variation in the amount of DL and UL traffic. The TDD scheme can estimate channel characteristics from the signals received using reciprocal features of the DL and UL channels. The use of the characteristics of the TDD scheme in the fixed/low-speed environment contributes to an increase in the transmission efficiency using various high-end communication technologies. As a result, with the use of the characteristics of the TDD scheme, it is possible to efficiently provide data service in the low-speed environment.

Moreover, because the present invention transmits/receives signals in units of short slots but uses a TDD DL and an FDD UL, it can easily satisfy the low-delay condition as in the FDD scheme. As a result, the present invention is advantageous for providing real-time services such as voice service. In addition, even when the channel characteristics change rapidly due to the high-speed movement of the terminal, the present invention can provide a reliable means of communication. The present invention can efficiently apply various communication technologies including signal processing technology in the signal transmission/reception process, making it possible to attain additional performance improvement.

While the invention has been shown and described with reference to a certain preferred embodiment thereof, it will be understood by those skilled in the art that various changes in form and details may be made therein without departing from the spirit and scope of the invention as defmed by the appended claims.

## Claims

1. A communication method in a communication system, the method comprising the steps of:
transmitting, by a base station, downlink information to a terminal through a frequency band of a first communication scheme for a downlink period; and
transmitting, by the terminal, uplink information to the base station through the frequency band of the first communication scheme or a frequency band of a second communication scheme that is different from the frequency band of the first communication scheme, for an uplink period.

2. The communication method of claim 1, wherein the first communication scheme is a time division duplex (TDD) scheme, and the second communication scheme is a frequency division duplex (FDD) scheme.

3. The communication method of claim 1, wherein transmitting the uplink information comprises:
determining whether the uplink information requires a low transmission delay;
generating data of a one-slot length using the uplink information if the uplink information requires the low transmission delay;
transmitting the data of a one-slot length through the frequency band of the second communication scheme during one slot; and
generating data of an uplink period length using the uplink information if the uplink information does not require a transmission delay less than a transmission delay threshold; and
transmitting the data of an uplink period length through the frequency band of the first communication scheme.

4. The communication method of claim 3, wherein the data of a one-slot length is generated by including control information associated with user information requiring a transmission delay less than the transmission delay threshold in a part corresponding to a mini control slot.

5. The communication method of claim 4, wherein the control information includes at least one of an acknowledgement (ACK)/non-acknowledgement (NACK) signal, a channel quality indicator (CQI) signal, a power control signal, a modulation and coding scheme (MCS) level signal and channel/user information.

6. The communication method of claim 3, wherein the data of an uplink period length is generated by including at least one of a ranging signal, a sounding signal, and control information associated with user information not requiring a transmission delay less than the transmission delay threshold, in a part corresponding to an uplink overhead.

7. The communication method of claim 6, wherein the control information includes at least one of an acknowledgement/non-acknowledgement (ACK/NACK) signal and a channel quality indicator (CQI) signal.

8. The communication method of claim 3, wherein transmitting uplink information further comprises transmitting the uplink information not requiring a transmission delay less than the transmission delay threshold through the frequency band of the second communication scheme if there is a surplus in resources of the frequency band of the second communication scheme.

9. The communication method of claim 1, wherein transmitting downlink information comprises:
determining whether the downlink information requires a low transmission delay;
generating data of a one-slot length using the downlink information if the downlink information requires the low transmission delay;
transmitting the data of a one-slot length through the frequency band of the first communication scheme during one slot of the downlink period;
generating data of a downlink period length using the downlink information if the downlink information does not require the low transmission delay; and
transmitting the data of a downlink period length through the frequency band of the first communication scheme.

10. The communication method of claim 9, wherein the data of a one-slot length is generated by including at least one of MAP information valid only for one slot and control information associated with user information requiring the low transmission delay, in a part corresponding to a mini control slot.

11. The communication method of claim 9, wherein the control information includes at least one of an acknowledgement/non-acknowledgement (ACK/NACK) signal, a channel quality indicator (CQI) signal, a power control signal, a modulation and coding scheme (MCS) level signal and channel/user information.

12. The communication method of claim 9, wherein the data of a downlink period length is generated by including at least one of a synchronization/preamble signal, system information, MAP information for both of the frequency band of the first and the second communication schemes, and control information associated with user information not requiring the low transmission delay, in a part corresponding to a downlink overhead.

13. The communication method of claim 12, wherein the control information includes at least one of an acknowledgement/non-acknowledgement (ACK/NACK) signal and a channel quality indicator (CQI) signal.

14. A system for use in a communication system, the system comprising:
a base station including;
a transmitter for transmitting downlink information to a terminal through a frequency band of a first communication scheme for a downlink period; and
a receiver for receiving uplink information from the terminal through the frequency band of the first communication scheme or a frequency band of a second communication scheme that is different from the frequency band of the first communication scheme, for an uplink period.

15. The system of claim 14, wherein the first communication scheme is a time division duplex (TDD) scheme, and the second communication scheme is a frequency division duplex (FDD) scheme.

16. The system of claim 14, wherein the receiver comprises:
a second communication scheme uplink signal receiver for receiving an uplink signal of the second communication scheme through the frequency band of the second communication scheme;
a slot-based data receiver for acquiring data of a one-slot length from the uplink signal of the second communication scheme, and detecting user information and control information requiring a transmission delay less than a transmission delay threshold from the data of a one-slot length;
a first communication scheme uplink signal receiver for receiving an uplink signal of the first communication scheme through the frequency band of the first communication scheme for the uplink period; and
a frame-based data receiver for acquiring data of an uplink period length from the uplink signal of the first communication scheme, and detecting user information and control information not requiring the transmission delay less than the transmission delay threshold from the data of an uplink period length.

17. The system of claim 16, wherein the data of a one-slot length is generated by including control information associated with user information requiring a transmission delay less than the transmission delay threshold in a part corresponding to a mini control slot.

18. The system of claim 17, wherein the control information includes at least one of an acknowledgement/non-acknowledgement (ACK/NACK) signal, a channel quality indicator (CQI) signal, a power control signal, a modulation and coding scheme (MCS) level signal and channel/user information.

19. The system of claim 16, wherein the data of an uplink period length is generated by including at least one of a ranging signal, a sounding signal, and control information associated with user information not requiring the transmission delay, in a part corresponding to an uplink overhead.

20. The system of claim 19, wherein the control information includes at least one of an acknowledgement/non-acknowledgement (ACK/NACK) signal and a channel quality indicator (CQI) signal.

21. The system of claim 14, wherein the transmitter comprises:
a mode selector for determining whether received user information requires a transmission delay less than a transmission delay threshold, to determine whether it will transmit the user information in units of frames or in units of slots;
a slot-unit data generator for receiving, if the user information requires the low transmission delay, the user information from the mode selector and generating data of a one-slot length using the received user information;
a frame-unit data generator for receiving, if the user information does not require the low transmission delay, the user information from the mode selector and generating data of a downlink period length using the received user information; and
a first communication scheme downlink signal transmitter for receiving the data of a one-slot length, transmitting the data of a one-slot length through the frequency band of the first communication scheme during one slot of the downlink period, receiving the data of a downlink period length and transmitting the data of a downlink period length through the frequency band of the first communication scheme for the downlink period.

22. The system of claim 21, wherein the data of a one-slot length is generated by including at least one of MAP information valid only for one slot and control information associated with user information requiring the low transmission delay, in a part corresponding to a mini control slot.

23. The system of claim 22, wherein the control information includes at least one of an acknowledgement/non-acknowledgement (ACK/NACK) signal, a channel quality indicator (CQI) signal, a power control signal, a modulation and coding scheme (MCS) level signal and channel/user information.

24. The system of claim 21, wherein the data of a downlink period length is generated by including at least one of a synchronization/preamble signal, system information, MAP information for both of the frequency band of the first and the second communication schemes, and control information associated with user information not requiring the low transmission delay, in a part corresponding to a downlink overhead.

25. The system of claim 24, wherein the control information includes at least one of an acknowledgement/non-acknowledgement (ACK/NACK) signal and a channel quality indicator (CQI) signal.

26. A system for use in a communication system, the system comprising:
a terminal including;
a receiver for receiving downlink information from a base station through a frequency band of a first communication scheme for a downlink period; and
a transmitter for transmitting uplink information to the base station through the frequency band of the first communication scheme or a frequency band of a second communication scheme which is different from the frequency band of the first communication scheme, for an uplink period.

27. The system of claim 26, wherein the first communication scheme is a time division duplex (TDD) scheme, and the second communication scheme is a frequency division duplex (FDD) scheme.

28. The system of claim 26, wherein the transmitter comprises:
a mode selector for determining whether received user information requires a transmission delay less than a transmission delay threshold;
a slot-unit data generator for receiving, if the user information requires the low transmission delay, the user information from the mode selector and generating data of a one-slot length using the received user information;
a second communication scheme uplink signal transmitter for transmitting the data of a one-slot length through the frequency band of the second communication scheme during one slot;
a frame-based data generator for receiving, if the user information does not require the low transmission delay, the user information from the mode selector and generating data of an uplink period length using the received user information; and
a first communication scheme uplink signal transmitter for transmitting the data of an uplink period length through the frequency band of the first communication scheme for the uplink period.

29. The system of claim 28, wherein the data of a one-slot length is generated by including control information associated with user information requiring the low transmission delay in a part corresponding to a mini control slot.

30. The system of claim 29, wherein the control information includes at least one of an acknowledgement/non-acknowledgement (ACK/NACK) signal, a channel quality indicator (CQI) signal, a power control signal, a modulation and coding scheme (MCS) level signal and channel/user information.

31. The system of claim 28, wherein the data of an uplink period length is generated by including at least one of a ranging signal, a sounding signal, and control information associated with user information not requiring the low transmission delay, in a part corresponding to an uplink overhead.

32. The system of claim 31, wherein the control information includes at least one of an acknowledgement/non-acknowledgement (ACK/NACK) signal and a channel quality indicator (CQI) signal.

33. The system of claim 28, wherein if there is a surplus in resources of the frequency band of the second communication scheme, the frame-based data generator generates data including the uplink information not requiring the low transmission delay, and transmits the generated data to the second communication scheme uplink signal transmitter.

34. The system of claim 26, wherein the receiver comprises:
a first communication scheme downlink signal receiver for receiving a downlink signal of the first communication scheme through the frequency band of the first communication scheme for the downlink period;
a mode selector for determining whether the downlink signal of the first communication scheme includes information requiring a transmission delay less than a transmission delay threshold;
a slot-based data receiver for acquiring, if the downlink signal of the first communication scheme includes information requiring the low transmission delay, data of a one-slot length from the downlink signal of the first communication scheme, and detecting user information and control information requiring the low transmission delay from the data of a one-slot length; and
a frame-based data receiver for acquiring, if the downlink signal of the first communication scheme includes information not requiring the low transmission delay, data of a downlink period length from the downlink signal of the first communication scheme, and detecting user information and control information not requiring the low transmission delay from the data of a downlink period length.

35. The system of claim 34, wherein the data of a one-slot length is generated by including at least one of MAP information valid only for one slot and control information associated with user information requiring the low transmission delay, in a part corresponding to a mini control slot.

36. The system of claim 35, wherein the control information includes at least one of an acknowledgement/non-acknowledgement (ACK/NACK) signal, a channel quality indicator (CQI) signal, a power control signal, a modulation and coding scheme (MCS) level signal and channel/user information.

37. The system of claim 34, wherein the data of a downlink period length is generated by including at least one of a synchronization/preamble signal, system information, MAP information for both of the frequency band of the first and the second communication schemes, and control information associated with user information not requiring the low transmission delay, in a part corresponding to a downlink overhead.

38. The system of claim 37, wherein the control information includes at least one of an acknowledgement/non-acknowledgement (ACK/NACK) signal and a channel quality indicator (CQI) signal.
